# EUROPÄISCHE PATENTANMELDUNG

(11) **EP 0 666 302 A1**
(43) Veröffentlichungstag der Anmeldung: **09.08.1995**
(21) Anmeldenummer: 95250021.3
(22) Anmeldetag: 27.01.1995
(51) Int. Cl.: C11D 1/32, B01F 17/00, C11D 3/38

(54) **Wasserlösliche Tensidmischungen aus mikrobiellen Biomassen**

(30) Priorität: 08.02.1994 DE 4404782
(71) Anmelder: AUF ANALYTIK UMWELTTECHNIK FORSCHUNG GmbH, D-12484 Berlin (DE)
(72) Erfinder: Klügel, Ulrich, D-12681 Berlin (DE); Deutsch, Klaus, D-10405 Berlin (DE); von Poeppinghausen, Eberhard, D-10117 Berlin (DE); Gnauck, Prof. Dr. Roland, D-12557 Berlin (DE); Herrmann, Jens, D-12627 Berlin (DE)
(74) Vertreter: Haupt, Wolfgang J.

(57) **Zusammenfassung**

Die Erfindung betrifft wasserlösliche Tensidmischungen, die aus mikrobiellen Biomassen wie industriellen Abfallprodukten durch alkalische Hydrolyse und weitere chemische Reaktion mit Fettsäurechloriden oder Fetten und Propylenoxid kostengünstig hergestellt werden können.

Die neuen Tensidmischungen besitzen eine verbesserte Wasserlöslichkeit und können vorteilhaft beispielsweise als technische Emulgatoren oder Reinigungsmittel sowie im weitesten Sinne als Tenside verwendet werden.

## Beschreibung

Die Erfindung betrifft wasserlösliche Tensidmischungen, die aus mikrobiellen Biomassen wie industriellen Abfallprodukten durch Hydrolyse und weitere chemische Umsetzung kostengünstig hergestellt und vorteilhaft beispielsweise als technische Emulgatoren oder Reinigungsmittel verwendet werden können.

Auf der Grundlage nachwachsender Rohstoffe hat sich in der letzten Zeit die Herstellung von zwei Tensidklassen durchgesetzt: von Alkylpolyglycosiden und von Eiweiß-Fettsäure-Kondensaten. Alkylglycoside werden aus Oxo- bzw. Fettalkoholen durch Reaktion mit reduzierenden Zuckern (Hexosen und Pentosen) erhalten. Dabei werden Zuckerhydroxylgruppen mit Fettalkoholen sauer verethert (DE-OS 40 06 192, EP-448 799) oder mit Fettsäuren oder Fettsäurechloriden verestert (EP-268 974). Für die technische Herstellung kommen das Transglucosidierungs-Verfahren sowie die Direktsynthese aus Fettalkoholen und Glucose in Frage. Durch Kondensation von Glucoseeinheiten entsteht ein Gemisch als Alkylmono-(di)- und -polyglucosiden. Als Zucker werden bevorzugt Mono- und Disaccharide verwendet (EP-275 939, DE-OS 41 03 681), die auch durch Hydrolyse von Polysacchariden, z.B. Cellulose oder Stärke gewonnen werden können [vgl. Gacesa,P., Hubble, J. (1987); Enzym Technology, Open University Press, Milton Keynes]. Eiweiß-Fettsäure-Kondensate werden durch Umsetzung von Eiweiß-Partialhydrolysaten mit Fettsäuren, Fettsäurechloriden oder -anhydriden in wäßriger Lösung unter Zusatz von Basen hergestellt. Als Fettsäurekomponenten dienen beispielsweise Derivate von pflanzlichen und tierischen Fettsäuren oder synthetische Fettsäuren gleicher Kettenlängenbereiche (DRP-688 633, 692 070, 702 386, 647 773, US-PS 2 015 912, 2 113 819, 2 041 265, DE-PS 1 617 851).

Zum alkalischen Aufschluß eiweißhaltiger Stoffe wurden Alkali- oder Erdalkaliverbindungen, wie Alkalihydroxide oder Erdalkalihydroxide oder auch Ammoniak genannt (DRP-723 902, DE-PS 1 000 388, DRP-692 070). Die Hydrolyse wird bei erhöhter Temperatur und gegebenenfalls erhöhtem Druck durchgeführt.

Um die Produkteigenschaften der Alkylpolyglycoside oder Eiweiß-Fettsäure-Kondensate speziellen Anforderungen anzupassen, wurden diese Produkte alkoxyliert (DE-OS 41 03 681, EP-405 967, DE-PS 970 958, DD-PS 9168).

Zur Herstellung von grenzflächenchemisch aktiven Verbindungen wurde bereits von der Anmelderin vorgeschlagen, Hefebiomassen oder Belebtschlämme mit Alkalimetallhydroxiden aufzuschließen und mit Fettsäurechloriden in organischen, mit Wasser nicht mischbaren Lösungsmitteln umzusetzen und gegebenenfalls zu ethoxylieren.
Weiterhin wurde vorgeschlagen, Hefebiomassen oder Belebtschlämme mit natürlichen Fetten im wäßrigen Medium in Anwesenheit von Alkalimetallhydroxiden umzusetzen. Alkoxylierungen der Produkte wurden hierbei ausgeschlossen.
Der erste Vorschlag besitzt hierbei den entscheidenden Nachteil der Verwendung von organischen, z.T. feuergefährlichen Lösungsmitteln, die einen beträchtlichen apparativen Aufwand erfordern. Die nach dem zweiten Vorschlag hergestellten Produkte weisen für viele Verwendungszwecke eine unzureichende Wasserlöslichkeit auf. Weiterhin sind in diesen Produkten Phasentrennungen von Bestandteilen des Biomasse-Derivatgemisches zu verzeichnen, was für viele Anwendungen unerwünscht ist.

Der Erfindung liegt die Aufgabe zugrunde, mikrobielle Biomassen wie Hefebiomassen oder Belebtschlämme, deren Bestandteile hinsichtlich ihrer chemischen Natur und ihrer Molekülgröße erhebliche Unterschiede aufweisen, durch geeignete Hydrolysatherstellung und Derivatisierung in physikalisch homogene Tensidmischungen mit guter Wasserlöslichkeit zu überführen, die im weitesten Sinne als Schäumungsmittel, Reinigungsmittel oder Emulgatoren verwendbar sind.

Die erfindungsgemäßen wasserlöslichen Tensidmischungen aus mikrobiellen Biomassen sind dadurch gekennzeichnet, daß sie entweder
a) durch Partialhydrolyse der Biomassen mit Erdalkalimetallhydroxiden, danach Abtrennung der unlöslichen Bestandteile und anschließende Reaktion mit Fettsäurechloriden oder Fetten, oder
b) durch Partialhydrolyse der Biomassen mit Ammoniaklösung und anschließende Reaktion mit Fettsäurechloriden oder Fetten, oder
c) durch Partialhydrolyse der Biomassen mit Alkalimetallhydroxiden und anschließende Reaktion mit Fetten und Propylenoxid, jeweils im alkalischen Medium, erhalten werden.
Das unter a) oder b) erhaltene Produkt kann gegebenenfalls zusätzlich mit Propylenoxid zur Reaktion gebracht werden, wenn eine weitere Modifizierung der Wasserlöslichkeit gewünscht wird.

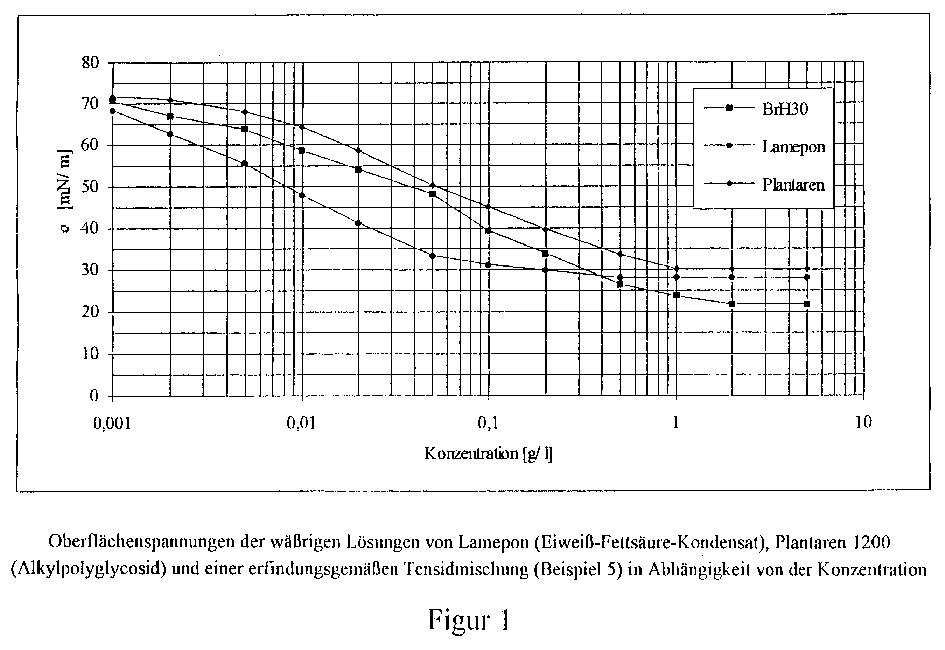

Als Ausgangsstoffe geeignete mikrobielle Biomassen sind Hefen wie Bäckerhefe, Brauereihefe oder Fraktionen dieser Biomassen wie sie als industrielle Abprodukte anfallen sowie Belebtschlämme aus der Abwasserreinigung.
Die alkalischen Hydrolysatlösungen dieser Biomassen werden durch Einwirkung von Kalkmilch oder Magnesiumhydroxid-Lösungen auf Suspensionen der Biomasse mit 10 bis 30 % Feststoffanteil bei Temperaturen von 90 bis 160 °C und Drücken von 1 bis 6,5 bar hergestellt. Die entstehenden Calciumsalze werden mit Soda gefällt und der Kalk mit den unlöslichen Hefebestandteilen abgetrennt. Der Aufschluß der Biomassesuspensionen mit wäßriger Ammoniaklösung erfolgt mit 2 bis 10 % NH₃ in der Lösung bei erhöhten Temperaturen von 80 bis 180 °C und erhöhten Drücken von 4 bis 12 bar. Die Werte von Druck und Temperatur sowie die NH₃-Konzentration bestimmen den Verlauf des Aufschlusses. Unlösliche Bestandteile können gegebenenfalls abgetrennt werden. Ein Vorteil dieser Hydrolysatherstellung besteht in der geringen Salzbelastung der Endprodukte.
Die Ausbeute beträgt je nach Hydrolysebedingungen 55 bis 95 %. Aus Hydrolysaten, die mit Alkalimetallhydroxiden hergestellt wurden, ist die Abtrennung der unlöslichen Bestandteile der Biomassen schwieriger, da sie im Hydrolysat gelieren. Die erhaltenen Hydrolysatlösungen mit einem Feststoffgehalt von 10 bis 20 Gew.-% werden anschließend mit Fettsäurechloriden einer Kettenlänge von 10 bis 20 Kohlenstoffatomen oder unter Zugabe von Alkalimetallhydroxiden mit Fetten umgesetzt. Die entstehenden Tensidmischungen sind gut wasserlöslich und weisen in wäßriger Lösung Oberflächenspannungen von 22 bis 28 mN/m bei kritischen Micellkonzentrationen (CMC) von 0,3 bis 1,0 g/l auf. Tensidmischungen, die aus mikrobiellen Biomassen nach der Hydrolyse mit Alkalimetallhydroxiden ohne Abtrennung der unlöslichen Hefebestandteile hergestellt werden, besitzen gleiche Oberflächenspannungen in wäßriger Lösung bei CMC von 0,3 bis 3,5 g/l. Durch Abtrennung der unwirksamen Hefebestandteile aus dem Hydrolysat können eine verbesserte physikalische Homogenität und eine höhere Löslichkeit erreicht werden.
Im Vergleich der erfindungsgemäßen Tensidmischungen mit herkömmlichen Eiweiß-Fettsäure-Kondensationsprodukten oder Alkylpolyglycosiden zeigt sich, daß die wäßrigen Lösungen der neuen Tensidmischungen gleiche CMC bei niedrigeren Oberflächenspannungen aufweisen (Fig. 1).

Die zweite, bereits erwähnte Möglichkeit, Tensidmischungen mit ausreichender Wasserlöslichkeit und Homogenität aus mikrobiellen Biomassen zu erhalten, besteht erfindungsgemäß in der Propoxylierung von Tensidmischungen aus mikrobiellen Biomassen, bei denen das Hydrolysat mit Alkalimetallhydroxiden ohne Abtrennung unlöslicher Biomassebestandteile gewonnen wurde und deren Herstellung bereits vorgeschlagen worden ist. Die Propoxylierung erfolgt durch Zugabe von 5 bis 20 Gew.-% Propylenoxid (bezogen auf das Biomasse-Fettsäure-Kondensat) zur Reaktionsmischung in wäßriger Lösung bei Normaldruck und einer Temperatur 40 bis 100 °C. Man erhält als Produkt eine Tensidmischung, die gegenüber der nicht propoxylierten Mischung eine verbesserte Wasserlöslichkeit aufweist. Die Oberflächenspannung der wäßrigen Lösung unterscheidet sich nicht von derjenigen der nicht propoxylierten Mischungen. Es ist weiterhin möglich, propoxylierte Biomasse-Fettsäure-Kondensate zu erhalten, indem die Biomasse alkalisch hydrolysiert, danach propoxyliert und anschließend mit Fetten umgesetzt wird oder auch die Umsetzung der Hefebiomasse mit Alkalimetallhydroxiden, Fetten und Propylenoxid gleichzeitig erfolgt. Die Eigenschaften dieser Produkte sind den vorher beschriebenen sehr ähnlich, wobei jedoch die Propoxylierung nach der Reaktion mit dem Fett bevorzugt ist.

Erfindungsgemäß können auch Tensidmischungen, die aus mit Kalk oder Ammoniak hergestellten Biomassehydrolysaten bestehen, anschließend propoxyliert werden. Alle neuen Tensidmischungen sind innerhalb von 14 bis 27 Tagen zu 98 % biologisch abgebaut (statistischer Test nach DIN 38 412).

Die Erfindung wird nachstehend ohne einschränkenden Charakter an Ausführungsbeispielen näher erläutert.

### Beispiel 1

Zu 36 Gewichtsteilen einer Brauereiabfallhefe (20 %ig) wird 1 Gewichtsteil Kalk gegeben und die Mischung 3 Stunden lang bei einer Temperatur von 100 °C gerührt. Dann werden die Calciumsalze mit 0,7 Gewichtsteilen Soda in Form von wäßriger Lösung gefällt und der Niederschlag abfiltriert. Anschließend gibt man zu 25 Gewichtsteilen des erhaltenen Hydrolysates 1,25 Gewichtsteile Recyclingfett (Mischfett aus pflanzlichen und/oder tierischen Fetten) und 1 Gewichtsteil Natriumhydroxid und rührt 4 Stunden lang bei einer Temperatur von 90 °C.
Das Produkt ist ein braunes Gel mit einem pH-Wert von 9 und einem Feststoffgehalt von 18 Gew.-%.

### Beispiel 2

Zu 36 Gewichtsteilen einer gewaschenen Belebtschlamm-Suspension (20 %ig) wird 1 Gewichtsteil Magnesiumhydroxid gegeben und die Mischung 2 Stunden lang bei einer Temperatur von 140 °C und einem Druck von 4 bar hydrolysiert. Dann setzt man bei Normaldruck 0,7 Gewichtsteile Soda in Form von wäßriger Lösung hinzu und filtriert.
Anschließend gibt man zu 25 Gewichtsteilen Hydrolysat 1,75 Gewichtsteile Kokosfett und 1,2 Gewichtsteile Natriumhydroxid und rührt 4 Stunden lang bei einer Temperatur von 90 °C.
Das Produkt ist eine graue gelartige Masse mit einem pH-Wert von 10 und einem Feststoffgehalt von 28 Gew.-%.

### Beispiel 3

Zu 36 Gewichtsteilen einer Bäckerhefe-Suspension (20 %ig) werden 24 Gewichtsteile Ammoniak-Lösung (12 %ig) gegeben und die Mischung bei einer Temperatur von 110 °C und einem Druck von 6,5 bar im Autoklaven behandelt sowie das erhaltene Hydrolysat filtriert.
Anschließend gibt man zu 30 Gewichtsteilen Hydrolysat 3 Gewichtsteile Ölsäurechlorid und rührt 1 Stunde lang bei einer Temperatur von 80 °C, wobei der pH-Wert durch Zugabe von Natronlauge auf 8,5 gehalten wird.

Das Produkt ist eine gelbbraune, viskose Flüssigkeit mit einem pH-Wert von 8,5 und einem Feststoffgehalt von 23 Gew.-%.

### Beispiel 4

Zu 10 Gewichtsteilen einer Brauereihefe-Suspension (20 %ig) werden 1 Gewichtsteil Natriumhydroxid und 1,25 Gewichtsteile Recyclingfett gegeben und die Mischung 4 Stunden lang bei einer Temperatur von 90 °C gerührt. Dann werden zu der Reaktionsmischung 0,3 Gewichtsteile Propylenoxid getropft und das Ganze eine weitere Stunde lang unter Rückfluß gerührt.
Nach dem Erkalten erhält man ein braunes Gel mit einem pH-Wert von 10 und einem Feststoffgehalt von 36 Gew.-%.

### Beispiel 5

Zu 10 Gewichtsteilen Bäckerhefe (30 %ig) werden 1,5 Gewichtsteile Natriumhydroxid, gelöst in 5 Gewichtsteilen Wasser, und 1,6 Gewichtsteile Palmfett gegeben sowie 0,4 Gewichtsteile Propylenoxid langsam zugetropft und die Mischung 4 Stunden lang bei einer Temperatur von 90 °C gerührt.
Das Produkt ist ein braunes Gel mit einem pH-Wert von 10 und einem Feststoffgehalt von 35 Gew-.%. Dieses Gel wird mit Salzsäure auf einen pH-Wert von 8,0 eingestellt und homogenisiert, wobei eine hellbraune Paste entsteht.

### Beispiel 6

Zu 100 Gewichtsteilen der nach Beispiel 1 erhaltenen Tensidmischung werden unter Rückfluß 3,6 Gewichtsteile Propylenoxid gegeben und die Mischung 1 Stunde und 30 Minuten lang gerührt. Das Produkt ist ein braunes Gel mit einem pH-Wert von 8,5 und einem Feststoffgehalt von 21 Gew.-%.

### Beispiel 7

Eine Menge von 100 Gewichtsteilen einer Suspension von Brauereiabfallhefe (20 %ig) wird 1 Stunde lang bei einer Temperatur von 90 °C mit 10 Gewichtsteilen Natriumhydroxid hydrolysiert. Anschließend werden 0,4 Gewichtsteile Propylenoxid zugetropft und die Mischung eine weitere Stunde lang bei 90 °C gerührt.
Dann werden 12,5 Gewichtsteile Recyclingfett zugesetzt und nochmals 4 Stunden lang bei einer Temperatur von 90 °C gerührt.
Das Produkt ist mit dem von Beispiel 4 vergleichbar.

In der nachfolgenden Tabelle sind die Eigenschaften der erfindungsgemäßen Tensidmischungen zusammengefaßt.

**TABELLE**

| Produkt von Beispiel | Oberflächenspannungen | |
|---|---|---|
| | σ [mN/m] | CMC [g/l] |
| 1 | 24 | 0,5 |
| 2 | 26 | 1,0 |
| 3 | 22 | 0,5 |
| 4 | 25 | 0,6 |
| 5 | 23 | 1,0 |
| 6 | 24 | 0,3 |
| 7 | 27 | 0,8 |

Alle Messungen wurden bei pH 7 vorgenommen.

Die beiliegende Figur 1 zeigt ein Diagramm der Oberflächenspannungen wäßriger Lösungen in Abhängigkeit von der Konzentration zweier Referenzprodukte im Vergleich zu einer erfindungsgemäßen Tensidmischung.

## Patentansprüche

1. Wasserlösliche Tensidmischungen aus mikrobiellen Biomassen, dadurch gekennzeichnet, daß sie entweder
a) durch Partialhydrolyse der Biomassen mit Erdalkalimetallhydroxiden, danach Abtrennung der unlöslichen Bestandteile und anschließende Reaktion mit Fettsäurechloriden oder Fetten, oder
b) durch Partialhydrolyse der Biomassen mit Ammoniaklösung und anschließende Reaktion mit Fettsäurechloriden oder Fetten, oder
c) durch Partialhydrolyse der Biomassen mit Alkalimetallhydroxiden und anschließende Reaktion mit Fetten und Propylenoxid, jeweils im alkalischen Medium, erhalten werden.

2. Tensidmischungen nach Anspruch 1, dadurch gekennzeichnet, daß das in 1a) oder 1b) erhaltene Produkt zusätzlich mit Propylenoxid zur Reaktion gebracht wird.
